# EUROPEAN PATENT APPLICATION

(11) **EP 0 713 300 A1**
(43) Date of publication of application: **22.05.1996**
(21) Application number: 95117068.7
(22) Date of filing: 30.10.1995
(51) Int. Cl.: H04B 7/005, H04Q 7/38

(54) **Method of reducing interference in a communication system**

(30) Priority: 19.11.1994 GB 9423400
(71) Applicant: MOTOROLA LTD, Basingstoke, Hampshire RG22 4PD (GB)
(72) Inventor: Boscovic, Dragon, Basingstoke, Hampshire RG24 0XL (GB); Valentine, Stephen, Basingstoke, Hampshire RG22 4XX (GB); Baker, Paul Dominic, Fair Oak, Hampshire S05 7JU (GB); Lee, Kwan Yee, Basingstoke, Hampshire RG22 4TM (GB)
(74) Representative: Morgan, Marc

(57) **Abstract**

The method includes making adjustments to a local subscriber unit to reduce interference in a foreign system and to improve the signal quality of the local subscriber unit. These are accomplished by a series of steps which will adjust subscriber unit power, reduce signal throughput, adjusting power control, and increase coding rates.

## Description

### Field of the Invention

The present invention relates, in general, to communication systems and, more particularly, to a method of reducing interference in a communication system.

### Background of the Invention

There are many ways used by communication system to avoid interference of an individual signal on a communication channel. However, current communication systems do not seek to reduce the interference they may be placing on another, remote signal.

For example, one subscriber unit may be transmitting a signal to a base site in one area of a communication system. This same signal may be causing interference to a second subscriber located in a second area of the communication system. This typically would result in the second subscriber being assigned to a different channel if the interference were severe enough. The result would be that part of the allocated spectrum is removed from operation in the location in which interference is caused.

Therefore, there exists a need in the communication environment not only to avoid other interference, but to limit the amount of interference which is being generated.

### Brief Description of the Drawings

FIG. 1 is a system diagram demonstrating the problem addressed by the present invention;
FIG. 2 is a graphical representation of adjacent channel interference;
FIG. 3 is a flow chart illustrating a process embodying the present invention;
FIG. 4 is a graph illustrating power levels of signals on adjacent communications channels;
FIG. 5 is a graphical representation of the result of changes in power control;
FIGS. 6 and 7 are graphical representations of a time division type of signal illustrating reduced signal throughput;
FIGS. 8 and 9 are graphical representations of a frequency division type of signal illustrating reduced signal throughput;
FIG. 10 is a graphical representation of a time division signal illustrating a higher coding rate;
FIG. 11 is a graphical representation of a frequency division signal illustrating a higher coding rate; and
FIG. 12 is a flow chart illustrating a second process embodying the present invention.

### Detailed Description of the Drawings

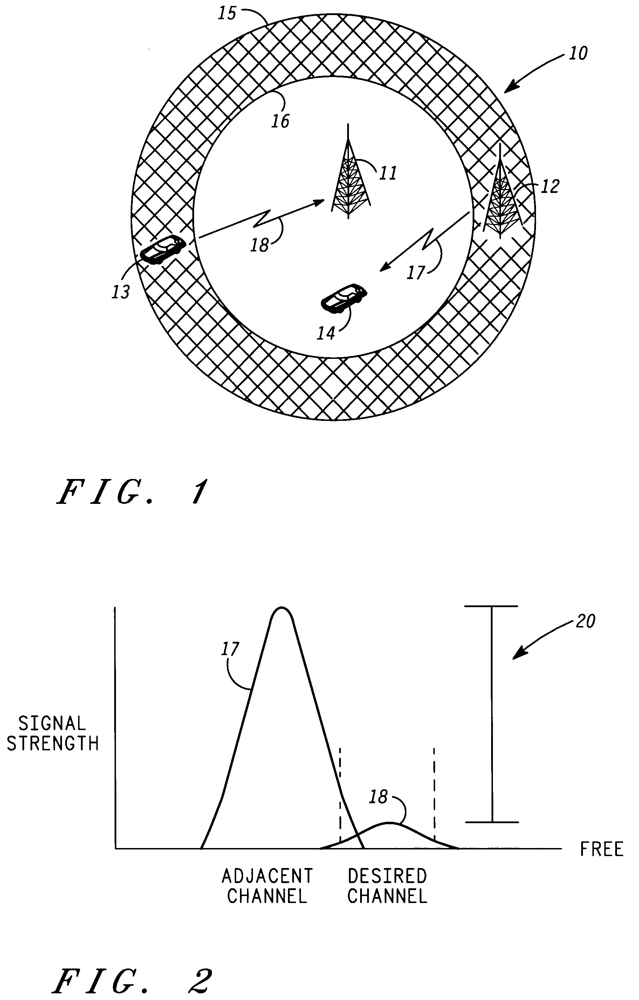

Referring initially to FIG. 1, a system diagram, generally designated 10, demonstration the problem addressed by the present invention is illustrated. System 10 shows two base sites. A desired base site 11 and an undesired base site 12. There are also a pair of subscriber units 13 and 14, where subscriber 13 is the desired subscriber and subscriber 14 is the undesired subscriber.

The potential for problem interference is illustrated in FIG. 1. Here subscriber 13 is in a first communication system utilizing base site 11. Subscriber 14 is in a second communication system utilizing base site 12. The transmissions by subscriber 14 cause adjacent channel interference with the reception of base site 11.

The problem of adjacent channel interference is illustrated graphically in FIG. 2. Here, the relative signal strength in decibels (dB) is plotted versus the frequency of the signals. As shown, the undesired signal 17 is much stronger than the desired signal 18 as measured at base site 11. The strong unwanted signal 17 from subscriber 14 will overlap desired signal 18 in the area marked 21. Area 21 represents adjacent channel interference.

The adjacent channel interference can cause the effective coverage area of base site 11 to be reduced from the area represented by circle 15 to the area represented by circle 16. The result is that subscriber 13 falls outside the smaller coverage area and is in danger of having its call terminated (i.e. dropped).

The prior art manner of resolving this problem was for subscriber 13 to hand-off to a different channel where there was not interference. However, while this resolves the problem for subscriber 13, the situation still remains that the system of which base site 12 is a part has taken spectrum away from the system of which base site 11 is a part. Therefore, there exists a need in the industry to address the more general, system wide problem resulting from this type of interference.

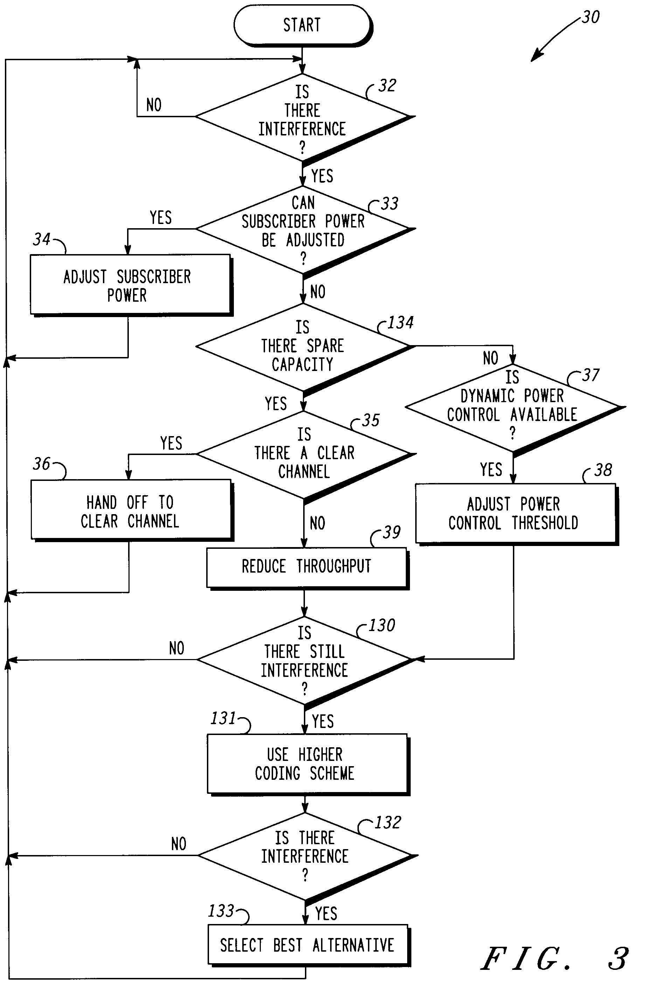

A solution to this problem is provided by a process, generally designated 30, illustrated by the flow chart of FIG. 3. In general, process 30 acts to determine if its own transmission would cause interference to another channel. In the above example, this process would be conducted by subscriber 14 so that it may avoid interfering with the communication signal from subscriber 13. Process 20 starts at step 30 which may be implemented by a particular event or set to run regularly in the background monitoring routine. Process 30 takes measurements of channels that it may interfere with to determine if there is any use of those channels.

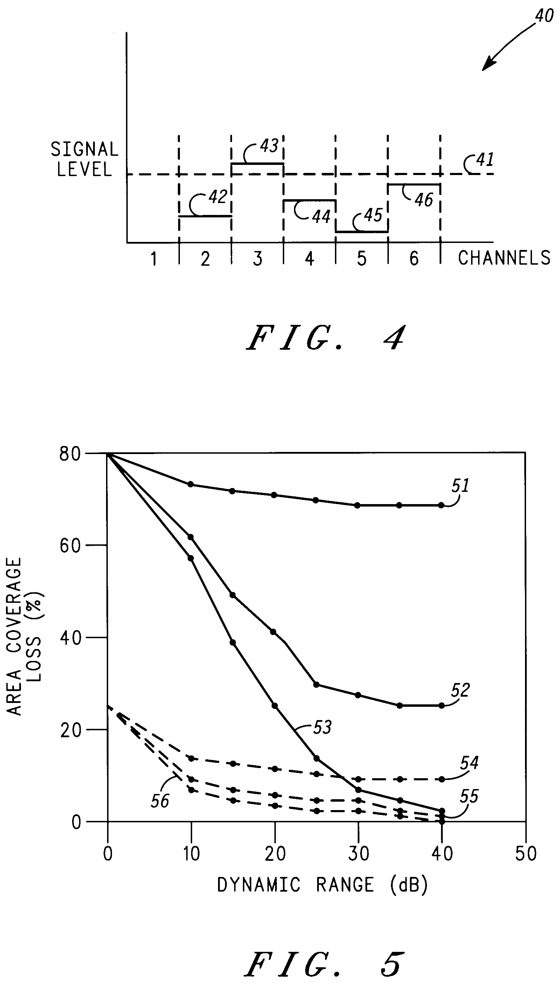

This step of taking measurements is represented by graph 40 of FIG. 4. In FIG. 4, the signal level of potential adjacent channels is plotted. The channels to be measured are either previously known by the subscriber or are provided to the subscriber by the base site. In FIG. 4, six channels are measured. The measurements are compared to a threshold level 41. As illustrated, channel 3 has a signal level, 43, that exceeds the threshold level. This means that the transmissions by subscriber 14 may cause interference with the subscriber communications on channel 3.

In addition, the subscriber unit may be provided with a global positioning system (GPS) transceiver to determine it's position. Already having information on the location of base sites with which it may interfere, this information can be used to determine which channels are checked by the process described above.

Returning now to FIG. 3, when a potential for interference exists, process 30 looks to see if the power of the subscriber (14) may be adjusted, decision step 33. In this case, if the power can be adjusted, the adjustment would be to reduce the power, step 34, to reduce the potential interference it was causing. Process 30 then loops back to step 32.

If the subscriber power could not be adjusted (e.g. it was at a minimum acceptable level to maintain its current communication), then process 30 determines if there is any spare capacity in its cell, step 134. If there is spare capacity, process 30 next determines if the spare channels are clear, decision step 35. If the spare channel is clear, a hand-off to the clear channel is conducted, step 36.

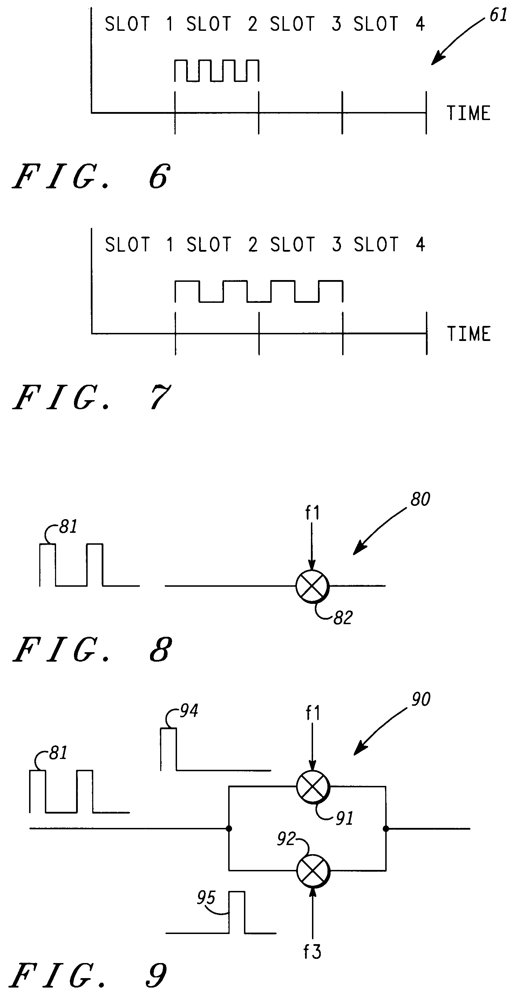

If it was determined there was no spare capacity, decision step 134, then process 30 looks to see if dynamic power control is available, decision step 37. If dynamic power control is available, then the power control threshold is adjusted. The result of this adjustment is illustrated in FIG. 5. FIG. 5 is a graph of the amount of area loss within a coverage area due to adjacent channel interference.

Dynamic power control is typically defined by three characteristics: threshold level, dynamic range, and step size. In FIG. 5, there are two sets of graphed lines. The first set, lines 51-53 are for a system having an allowable Adjacent Channel Coupled Power (ACCP) of 50 dB. By changing the allowable ACCP to 70 dB, thereby permitting less interference, the same signals will result in the area coverage loss represented by lines 54-56. In addition, by changing the threshold interference level from -85 dBm, as illustrated by line 52, to -100 dBm, as illustrated by line 53, an improvement in loss of coverage area is improved. Finally, as the dynamic range is moved from 10 dB to 40 dB, there is also an improvement in the coverage area lost due to the interference.

Returning now to FIG. 3, if there was no clear channel for hand-off, decision step 35, then process 30 can attempt to reduce the throughput, step 39. A reduction in throughput is illustrated graphically in FIGS. 6-9.

In FIGS. 6 and 7, a time division signal is shown at normal throughput, graph 61, and at reduced throughput, graph 71. Here, the same amount of information is sent in each example, but the reduced throughput requires two time slots as opposed to one in the normal mode.

In FIGS. 8 and 9, the same type of reduced throughput is illustrated for a frequency division system. Diagram 80 shows normal operation where a mixer 82 is used to combine a signal f1 with an input signal represented by 81. The entire signal is then transmitted in one frequency. In FIG. 9, the same signal 81 is divided into two portions 94 and 95. Signal portions 94 and 95 are then mixed in mixers 91 and 92 with transmission frequencies f1 and f2, respectively. This results in reduced throughput of the original signal since it is now divided and sent over two frequencies.

Returning now to FIG. 3, after the attempt to reduce the throughput, step 39, process 30 then determines if there is still interference, decision step 130. If there is no longer interference, then process 30 returns to decision step 32. If interference remains following step 39, or if there is no dynamic power control available, decision step 37, then process 30 attempts to use a higher M-ary coding scheme, step 131. By switching to a higher level M-ary coding scheme, the modulation bandwidth narrows, providing less out of band emission resulting in less interference.

Once the higher coding rate has been used, the process 30 again checks to see if interference still exists, decision step 132. If there is no more interference, then process 30 loops back to decision step 32.

If interference still remains following decision step 132, then process 30 determines which of the previous modifications provides the best alternative and implements that alternative, step 133. Since process 30 is a continuing function, it then loops back to decision step 32 and tries again.

While the process described above will adjust your signal to produce less interference on someone else, other subscriber units may not have the same adjustments built into their systems. Therefore, it is also necessary to provide a method by which a subscriber unit can adjust their own system to avoid interference being caused by a foreign system. In FIG. 12, this type of process, generally designated 120, is illustrated beginning at step 121.

Process 120 proceeds by determining if the quality of the signal is sufficient, decision step 122. This is done by determining the Signal Quality Estimate (SQE) of the signal. If the SQE is satisfactory, then process 120 loops back to decision step 122.

If the SQE is not sufficient, then process 120 determines if power control is available, decision step 320. If power control is available, then the power is adjusted, step 321. Process 120 then checks the quality again, decision step 322. If the quality is sufficient, process 120 returns to decision step 122. If the SQE is not sufficient, or if power control was not available in decision step 320, then process 120 determines if there is spare capacity in the system, decision step 123.

If spare capacity exists, process 120 will then select another channel, step 124, if there is a clear channel. Process 120 then checks the system quality again, decision step 125. If the quality is now sufficient, process 120 loops back to decision step 122. If it is still not sufficient, then process 120 reduces the bandwidth of the signal, step 127. This is done in the same manner as described with relation to FIG. 3 by reducing the signal throughput.

Following the bandwidth adjustment, process 120 again checks to determine if the quality is sufficient, decision step 128. If the quality is sufficient, process 120 loops back to decision step 122. If the quality is not sufficient, then process 120 adjusts the channel coding, step 129.

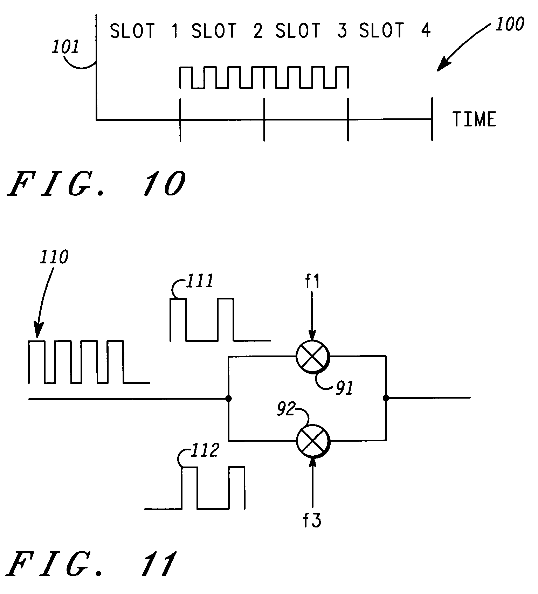

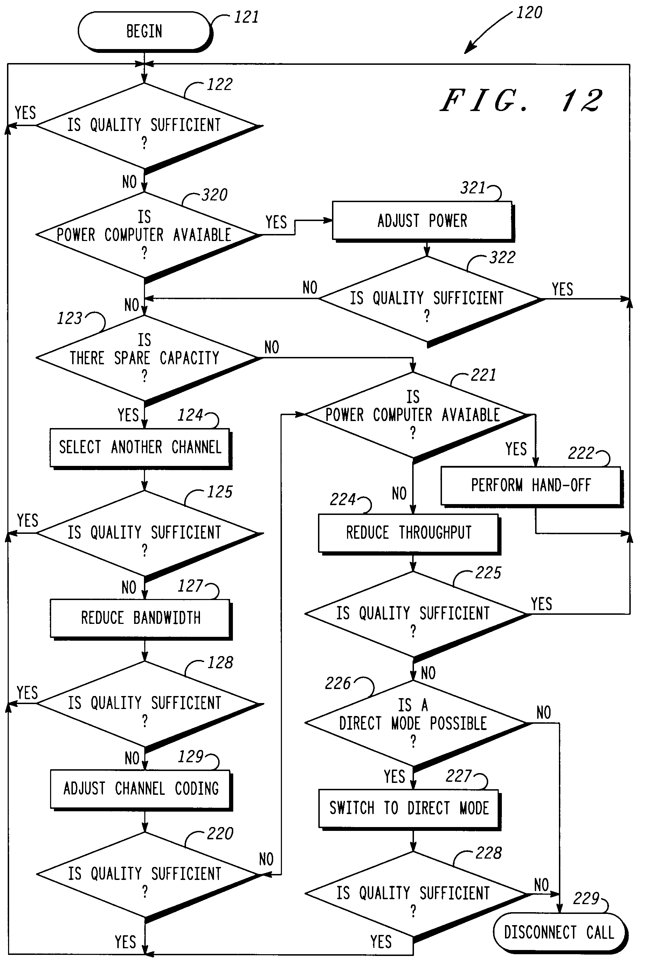

This type of higher coding rate is illustrated in FIGS. 10 and 11 for time division and frequency division signals, respectively. In FIG. 6, a time division signal 61, with normal coding, is illustrated. In FIG. 10, the same time division signal with extra coding is illustrated as signal 100. Here the amount of coding has been doubled and the signal now takes two time slots to transmit. The distinction between this and the time division signal of FIG. 7 is that in FIG. 7 the spectrum capacity was reduced. In FIG. 10, the spectrum used has not changed from that of the normal signal.

In FIG. 11, a method according to a feature of a preferred embodiment of the invention is provided for reducing interference in a communication system. Interference is reduced in the communications system by allowing communications units to switch communications to direct mode transmissions (227) if a quality of a signal is of insufficient level and direct mode processing is available.

In FIG. 11, the same mixers 91 and 92 are utilized for converting a signal 110 to the correct transmission frequency as were used in FIG. 9. However, here a signal 110 having a higher coding rate is being used. This means that more information is being sent over each frequency. If the coding rate were doubled, then the same spectrum that is being used for f1 in FIG. 8 would be used in each frequency in FIG. 11.

Once again, process 120 determines if the quality of the signal is sufficient, decisions step 220. If the quality is sufficient, process 120 loops back to decision step 122. If the quality is still not sufficient, or if there was no spare capacity in the system, decision step 123, then process 120 determines if there is another cell available, decision step 221. If another cell is available, then a hand-off of the signal is performed, step 222, and process 120 returns to decision step 122.

If another cell is not available, then process 120 reduces the throughput, step 224, and determines if the quality of the signal is now sufficient, decision step 225. If the signal quality is sufficient, process 120 returns to decision step 122. If the signal quality is still not sufficient, then process 120 determines if a direct mode communication is possible, decision step 226.

Direct mode communication is where one subscriber unit will communicate directly with another unit without utilizing the infrastructure equipment. If direct mode is possible, then process 120 switches to direct mode, step 227. Signal quality is again checked, decision step 228. If the quality is sufficient, process 120 returns to decision step 122. If the signal quality is not sufficient, or if direct mode communication was not available, decision step 226, then, as a last alternative, process 120 may be forced to disconnect the call, step 229.

As described, process 120 provides a method by which the quality of a communication link may be improved permitting the system operator to provide a higher quality of service.

Thus, it will be apparent to one skilled in the art that there has been provided in accordance with the invention, a method of reducing interference in a communication system that fully satisfies the objects, aims, and advantages set forth above.

While the invention has been described in conjunction with specific embodiments thereof, it is evident that many alterations, modifications, and variations will be apparent to those skilled in the art in light of the foregoing description. Accordingly, it is intended to embrace all such alterations, modifications, and variations in the appended claims.

## Claims

1. A method of reducing interference in a communication system, the method being characterized by the steps of:
adjusting a power level of a subscriber unit (34) if interference exists and the subscriber can have its power adjusted;
handing-off the subscriber to a clear channel (36) if interference exists, the subscriber can not have its power adjusted, there is spare capacity in the system, and a clear channel exists;
reducing the throughput of a signal (39) from the subscriber to a base station if interference exists, the subscriber can not have its power adjusted, there is spare capacity in the system, and there is no clear channel to which the subscriber can be handed-off;
adjusting a dynamic power control threshold (38) of the subscriber if interference exists, the subscriber can not have its power adjusted, there is no spare capacity in the system, and dynamic power control is available; and
selecting a higher M-ary modulation scheme (131) for the signal if interference exits following the steps of adjusting the dynamic power control or reducing the throughput of the signal, or if interference exists, the subscriber can not have its power adjusted, there is no spare capacity in the system, and dynamic power control is not available.

2. The method of claim 1 further characterized by the step of selecting a best alternative (133) from the foregoing steps if, following said step of selecting a higher M-ary modulation scheme (131), interference still exists.

3. A method of reducing interference in a communication system, the method being characterized by the steps of:
determining a first change in interference (32) if an action adjusting a power level of a subscriber unit (34) is taken;
determining a second change in interference (225) if an action reducing a throughput of a signal (39) is taken;
determining a third change in interference (322) if an action adjusting a dynamic power control threshold (38) of said subscriber is taken;
determining a fourth change in interference (132) if an action increasing a M-ary modulation scheme for said signal (131) and reducing said throughput of said signal (39) is taken;
determining a fifth change in interference if an action increasing said M-ary modulation scheme for said signal (131) and adjusting said dynamic power control threshold of said subscriber (38) is taken;
determining a sixth change in interference (220) if an action increasing a coding rate for said signal (129) is taken;
selecting one of said first, second, third, fourth, fifth, and sixth changes in interference which provides a preferred reduction in interference; and
implementing said action to provide said preferred reduction in interference.

4. A method of reducing interference in a communication system, the method being characterized by the step of:
switching to direct mode transmission (227) if a quality of a signal is insufficient and direct mode processing is available.

5. The method of claim 4 wherein the step of switching to direct mode transmission is preceded by the steps of:
adjusting power control (321) if a quality of a signal is insufficient and power control is available;
selecting a new channel (124) if a quality of said signal is insufficient and there is spare channel capacity;
reducing a bandwidth of said signal (127) from a subscriber to a base station, following said step of selecting said new channel (124), if said quality of said signal is insufficient and dynamic power control is available;
adjusting a coding of said new channel (129), following said step of reducing said bandwidth of said signal (127), if said quality of said signal is insufficient, or adjusting said coding of said new channel (129), following said step of selecting a new channel (124), if said quality of said signal is insufficient and dynamic power control is not available;
performing a hand-off of the signal (222) to another cell if said quality of said signal is insufficient and there is no spare channel capacity or, following said step of adjusting said coding of said new channel (129), if said signal is insufficient; and
reducing a throughput of said signal (224) if said quality of said signal is insufficient, there is no spare channel capacity, there are no other cells available for hand-off, and dynamic power control is not available.

6. The method of claim 5 further comprising the step of discontinuing said signal (229) if said quality of said signal is insufficient, there is no spare channel capacity, there are no other cells available for hand-off, dynamic power control is available, and direct mode processing is not available, or, following said step of switching to direct mode, if said quality of said signal is insufficient.

7. A method of reducing interference in a communication system, the method being characterized by the steps of:
determining a first change in interference (125) if an action selecting a new channel (124) is taken;
determining a second change in interference (128) if an action selecting said new channel (124) and reducing a bandwidth of a signal (127) is taken;
determining a third change in interference (220) if an action selecting said new channel (124), reducing said bandwidth of said signal (127), and adjusting a channel coding rate (129) is taken;
determining a fourth change in interference (322) if an action adjusting a power of a subscriber unit (321) is taken;
determining a fifth change in interference (225) if an action reducing a throughput of said signal (224) is taken;
determining a sixth change in interference (228) if an action reducing throughput of said signal (224) and switching to a direct mode (227) is taken;
determining a seventh change in interference (228) if an action switching to said direct mode (227) is taken;
selecting one of said first, second, third, fourth, fifth, sixth, and seventh changes in interference which provides a preferred reduction in interference; and
implementing said action to provide said preferred reduction in interference.
